(19) Europäisches Patentamt
European Patent Office
Office européen des brevets

(11) EP 3 712 910 B1

(12) **EUROPEAN PATENT SPECIFICATION**

(45) Date of publication and mention
of the grant of the patent:
**01.01.2025 Bulletin 2025/01**

(21) Application number: **18879052.1**

(22) Date of filing: **08.11.2018**

(51) International Patent Classification (IPC):
*H01F 1/06* (2006.01)    *H01F 1/047* (2006.01)
*H01F 3/08* (2006.01)    *C09D 11/03* (2014.01)
*B42D 25/369* (2014.01)    *B41M 3/14* (2006.01)

(52) Cooperative Patent Classification (CPC):
**H01F 1/061; B22F 1/05; B22F 1/16; B42D 25/369;
C09D 11/037; H01F 1/047**

(86) International application number:
**PCT/KR2018/013518**

(87) International publication number:
**WO 2019/098599 (23.05.2019 Gazette 2019/21)**

(54) **ALNICO-BASED MAGNETIC PARTICLES FOR SECURITY INK**

MAGNETISCHE TEILCHEN AUF ALNICO-BASIS FÜR SICHERHEITSTINTE

PARTICULES MAGNÉTIQUES À BASE D'ALNICO POUR ENCRE DE SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2017 KR 20170154199**

(43) Date of publication of application:
**23.09.2020 Bulletin 2020/39**

(73) Proprietor: **Korea Minting, Security Printing
& ID Card Operating Corp.
Daejeon 34132 (KR)**

(72) Inventors:
• **CHOE, Won Gyun
Daejeon 34198 (KR)**
• **KIM, Su Dong
Daejeon 34050 (KR)**

• **KIM, Hong Keon
Daejeon 34082 (KR)**
• **KANG, Ju Hee
Daejeon 35268 (KR)**
• **KIM, Hyun Soo
Daejeon 34185 (KR)**
• **KIM, E Den
Gwangju 61915 (KR)**

(74) Representative: **Kraus & Lederer PartGmbB
Thomas-Wimmer-Ring 15
80539 München (DE)**

(56) References cited:
JP-A- 2016 523 794    KR-A- 20150 116 841
KR-A- 20170 032 710    KR-A- 20170 078 023
KR-A- 20170 078 023    KR-B1- 100 744 351
KR-B1- 101 718 505

**Description**

[Technical Field]

The present invention relates to AlNiCo-based magnetic particles for a security ink and a security ink including the same, and more particularly, to AlNiCo-based magnetic particles for a security ink in which magnetic particles may have excellent composition uniformity due to a previously designed value to have uniform hard magnetic properties and improved security, and a security ink including the same.

[Background Art]

A security material may be essential for an area requiring forgery prevention. As an example, the security material is being used in securities such as checks, stamps, gift cards, certificate stamps, and bonds, in the field of security printing.
Currently, among the security materials, magnetic particles having a core-shell structure formed by coating a magnetic body with an inorganic material are known, and it is known that the magnetic particles are coated with an inorganic material for brightening a dark color of the magnetic body or further coated with another kind of inorganic material for improving mechanical physical properties of the magnetic particles (Korean Patent Laid-Open Publication No. 2013-0072444).
Recently, a study for maximizing security of a security product using a security material has been attempted. As a first step of the study, as a method of making the coercivity and the magnetization density of magnetic particles be within specific ranges, more specifically, when ferromagnetic particles having a relatively large coercivity and soft-magnetic particles having a relatively small coercivity are mixed and formed into a certain shape or pattern, there has been suggested a possibility of maximizing the security of a security product.
However, by the evolution of highly developed measuring equipment, when the security material has a simple pattern or a difference in the coercivity of the mixed magnetic particles is too large, the security material is easily recognizable by general equipment, and thus, the security material is required to have a certain window of a coercivity and a magnetization density so that the security material is recognized only by high-priced high resolution recognition equipment (hereinafter, referred to as "high-priced recognition equipment").
However, the conventional magnetic particles have still problems as follows, for solving the above problem: 1) when the magnetic particles have a magnetization density that is too high or too low, it is difficult to measure a unique signal of the magnetic particles by the high-priced recognition equipment; 2) when the size of the magnetic particles is too large or too small, it is difficult for the magnetic particles to effectively reflect sunlight, so that it becomes hard to conceal original dark colored particles, and thus, the security is rapidly deteriorated and a problem such as printing defects may be caused during a security printing process.
As a plan for solving the problems, i) a method of producing magnetic particles by agglomerating relatively small nanoparticles with a binder, and ii) a method of pulverizing relatively large particles into a desired size, may be suggested.
However, since the agglomeration method with a binder of i) may cause a problem of binder swelling during agglomeration with magnetic particles, it is difficult to produce magnetic particles for security having a certain size and a certain shape.
The pulverization method of ii) may be advantageous in terms of coercivity, magnetization density, purity, costs, and the like, since the binder is not added, unlike the agglomeration method with a binder of i).
However, in the pulverization method of ii), the magnetic particles are generally produced by a crush method, and we confirmed ourselves that it is difficult to adjust the particle size in a several micrometer level by the crush method. Besides, powder starting from a starting material having a relatively high coercivity has a greatly decreased coercivity as the size decreases.
In addition to the two methods, an atomization process is known as a method of producing magnetic particles having a certain size. The atomization process is classified into a gas atomization process, a water atomization process, and a mixed spraying process, depending on the kind of cooling media. Generally, in the atomization process, a molten alloy is sprayed into a cooling medium through a nozzle to allow a molten alloyalloy and the cooling medium to collide with each other to cool the droplets of the molten alloy, thereby allowing production of fine magnetic particles having a particle diameter of dozens to hundreds of micrometers.
However, in the water atomization process, water ($H_2O$) is used as a main cooling medium, and thus, an oxidation problem of powder to be produced is serious.
In addition, in the gas atomization process, since inert gas ($N_2$, Ar, He), air, or the like is used as a cooling medium, an oxidation problem and an impurity incorporation problem less occur during powder production, so that high-quality powder may be produced; however, a cooling effect is relatively small, so that there is a concern of occurrence of microsegregation during the production process, a technical difficulty in production of magnetic particles having a certain shape is caused, and the yield is about 5% which is very low, so that the commerciality is very low.

Thus, the present applicant has provided a production technology of AlNiCo-based magnetic particles which may effectively reflect sunlight to conceal dark-colored magnetic particles, have magnetic properties allowing the magnetic particles to be operable as a strong security element, and has a printing suitability (Korean Patent Registration No. 1718505), and as a resulting of continuously conducting relevant studies more in depth, established a production technology of AlNiCo-based magnetic particles having an improved yield and more improved security, thereby filing the present invention.

KR 2017 0078023 A discloses core particles containing 2 to 12 wt% of Al, 15 to 20 wt% of Ni, 21 to 27 wt% of Co, 0.5 to 5 wt% of Cu, 1 to 10 wt% of Ti and an inorganic shell covering at least a part of the surface of the core particle.

**[Disclosure]**

[Technical Problem]

An object of the present invention is to provide an AlNiCo-based magnetic particle having improved security.

Specifically, an object of the present invention is to provide an AlNiCo-based magnetic particle which has magnetic properties that can be distinguished from paramagnetic particle by high-priced recognition equipment, has a bright color, has excellent printability, and simultaneously has a designed composition and an extremely uniform composition, thereby stably forming a fine line security pattern also.

[Technical Solution]

In one general aspect, as defined in claim 1, an AlNiCo-based magnetic particle (I) is a hard magnetic particle including: a core particle containing Al, Ni, and Co; and an inorganic shell covering the core particle, wherein the core particle is an ultrafine particle having $D_{50}$ of 12 $\mu$m or less, the $D_{50}$ being a particle size corresponding to 50% in a particle size cumulative distribution of the core particles, and the core particle has a composition uniformity of the following Equations 1, 2, and 3:

$$\text{Equation 1: } 10 \leq \text{UNF (Al)}$$

$$\text{Equation 2: } 10 \leq \text{UNF (Ni)}$$

$$\text{Equation 3: } 10 \leq \text{UNF (Co)}$$

wherein UNF (Al) is a value obtained by dividing an average Al composition among the core particles by a standard deviation of an Al composition, based on the % by weight of the composition, UNF (Ni) is a value obtained by dividing an average Ni composition among the core particles by a standard deviation of a Ni composition, based on the % by weight of the composition, and UNF (Co) is a value obtained by dividing an average Co composition among the core particles by a standard deviation of a Co composition, based on the % by weight of the composition.

In another general aspect, an AlNiCo-based magnetic particle (II) is a hard magnetic particle including: a core particle containing Al, Ni, and Co; and an inorganic shell covering the core particle, wherein the core particle is an ultrafine particle having $D_{50}$ of 12 $\mu$m or less, the $D_{50}$ being a particle size corresponding to 50% in a particle size cumulative distribution of the core particles, and the core particle is produced by an atomization process using a refrigerant containing at least water and satisfies the following Equations 4, 5, and 6, based on a designed composition which is a composition of a molten alloy containing Al, Ni, and Co used during atomization:

$$\text{Equation 4: } \frac{|C_m(Al) - C_0(Al)|}{C_0(Al)} \times 100 \leq 6$$

$$\frac{|C_m(Ni) - C_0(Ni)|}{C_0(Ni)} \times 100 \leq 3$$

Equation 5:

$$\frac{|C_m(Co) - C_0(Co)|}{C_0(Co)} \times 100 \leq 4$$

Equation 6:

wherein $C_m$ (Al) is an average Al composition among the core particles, based on the % by weight of the composition, $C_0$ (Al) is an Al composition of the designed composition, based on the % by weight of the composition, $C_m$ (Ni) is an average Ni composition among the core particles, based on the % by weight of the composition, $C_0$ (Ni) is a Ni composition of the designed composition, based on the % by weight of the composition, $C_m$ (Co) is an average Co composition among the core particles, based on the % by weight of the composition, and $C_0$ (Co) is a Co composition of the designed composition, based on the % by weight of the composition.

In the AlNiCo-based magnetic particles (I and II) according to an exemplary embodiment of the present invention, the core particle may further satisfy the following Equations 7 and 8:

Equation 7:  $3 \ \mu m \leq D_{50} \leq 12 \ \mu m$

Equation 8:  $10 \ \mu m \leq D_{90} \leq 20 \ \mu m$

wherein $D_{50}$ is a particle size corresponding to 50% in a particle size cumulative distribution of the core particles, and $D_{90}$ is a particle size corresponding to 90% in a particle size cumulative distribution of the core particles.

In the AlNiCo-based magnetic particles (I and II) according to an exemplary embodiment of the present invention, the inorganic shell includes a metal shell, and the metal shell may satisfy the following Equations 9 and 10:

Equation 9:  $50 \ nm \leq t_m \leq 100 \ nm$

Equation 10:  $\sigma_t \leq 30 \ nm$

wherein $t_m$ is an average thickness of the metal shell, and $\sigma_t$ is a standard deviation of a metal shell thickness. Units: 1 emu/g corresponds to 1 $Am^2/kg$ and 1 Oe corresponds to $1000/4\pi$ A/m.

In the AlNiCo-based magnetic particles (I and II) according to an exemplary embodiment of the present invention, the inorganic shell may further include a dielectric shell positioned on an upper or lower portion of the metal shell.

In the AlNiCo-based magnetic particles (I and II) according to an exemplary embodiment of the present invention, the magnetic particle may have a saturation magnetization (Ms) of 50 to 150 emu/g and a residual magnetization (Mr) of 10 to 40 emu/g.

In the AlNiCo-based magnetic particles (I and II) according to an exemplary embodiment of the present invention, the magnetic particle may have a coercivity of 100 to 500 Oe.

In the AlNiCo-based magnetic particles (I and II) according to an exemplary embodiment of the present invention, the core particle may further contain one or two or more fourth elements selected from Cu, Ti, Fe, and Si.

In the AlNiCo-based magnetic particles (I and II) according to an exemplary embodiment of the present invention, the core particle may have a value of 10 or more, the value being obtained by dividing an average fourth element composition among the core particles by a standard deviation of a fourth element composition, based on the % by weight of the composition.

In the AlNiCo-based magnetic particles (I and II) according to an exemplary embodiment of the present invention, the core particle may further contain Ti, Fe, and Cu, and may contain 4 to 12% of Al, 10 to 20% of Ni, 15 to 25% of Co, 1 to 10% of Ti, 0.5 to 5% of Cu, a remainder of Fe, and other inevitable impurities, based on the % by weight.

The AlNiCo-based magnetic particles (I and II) according to an exemplary embodiment of the present invention may have an infrared reflectance of 60% at a wavelength of 900 nm.

In another general aspect, as defined in claim 10, a security ink includes the AlNiCo-based magnetic particles (I and II) described above.

In still another general aspect, as defined in claim 11, securities includes the AlNiCo-based magnetic particles (I and II) described above.

[Advantageous Effects]

The AlNiCo-based magnetic particle for security according to the present invention is an ultrafine particle having $D_{50}$ of 12 $\mu$m or less and simultaneously has a precisely designed composition, thereby having improved security.

The AlNiCo-based magnetic particle for security according to the present invention is an ultrafine particle having $D_{50}$ of 12 $\mu$m or less, simultaneously has a significantly small composition deviation to have uniform magnetic properties for each particle, and allows implementation of a security element having a high degree of shape.

The AlNiCo-based magnetic particle according to an exemplary embodiment of the present invention has a color lightening property to allow a dark-colored magnetic particle to be concealed, enhanced security to allow the magnetic particle to be distinguishable from a hard magnetic body and recognizable only by high-priced recognition equipment, and has printability to allow a security element production method using a conventional ink to be utilized as it is without a high degree of modification.

Since the AlNiCo-based magnetic particle according to an exemplary embodiment of the present invention has a significantly improved infrared reflectivity, multiple security is possible by independent elements different from each other such as magnetic properties making it difficult to distinguish the magnetic particle from a hard magnetic particle, an infrared reflective property, and a high degree of shaping.

(Description of Drawings)

FIG. 1 is a scanning electron microscope photograph of an AlNiCo-based magnetic particle produced according to an exemplary embodiment of the present invention.

FIG. 2 is a scanning electron microscope photograph of a cross section of an AlNiCo-based magnetic particle produced according to an exemplary embodiment of the present invention, and a drawing illustrating a measured thickness distribution of a silver shell.

FIG. 3 is a drawing illustrating an optical image, a soft magnetic image, a hard magnetic image, and an infrared image of security elements formed by a security ink including the AlNiCo-based magnetic particles produced according to an exemplary embodiment of the present invention and a security ink including general soft magnetic particles.

[Best Mode]

Hereinafter, the AlNiCo-based magnetic particle of the present invention will be described in detail. Technical terms and scientific terms used herein have the general meaning understood by those skilled in the art to which the present invention pertains unless otherwise defined, and a description for the known function and configuration which may unnecessarily obscure the gist of the present invention will be omitted in the following description and the accompanying drawings.

The present applicant confirmed that in the process of actually producing a security element on securities using fine AlNiCo-based soft magnetic particles having a size of a micrometer ($\mu$m) order, when a security element is designed in a fine line shape, the security element is not reproducibly and distinguishably recognizable from a paramagnetic particle-based security element even by high-priced recognition equipment, or in addition, the shape of the designed security element is not reproducibly recognized. As a result of conducting a study in depth for solving the problem, it was confirmed that a uniform composition property among the AlNiCo-based magnetic particles is essential, that is, it is essential to suppress a composition deviation among the magnetic particles to be produced, for stably implementing a fine line security element. As a result of continuously conducting a study for a long period of time for securing a uniform composition property, it was confirmed that a conventional gas atomization process (an atomization process using a gas as a cooling medium) has a limitation of not preventing a segregation causing an aluminum (Al)-rich phase or an iron (Fe)-rich phase by a slow cooling rate, and the composition deviation is suppressed only when oxidation of easily-oxidizable elements (as an example, Al, Ti, or the like) is prevented in a cooling process while rapid cooling is induced using water as a cooling medium, thereby producing particles having uniform magnetic properties and a substantially the same composition as a designed composition, and thus, the present invention has been filed.

Thus, the present invention includes an embodiment which is a magnetic particle (I) having a suppressed composition deviation among the particles and another embodiment which is a magnetic particle (II) having substantially the same composition as the composition of a molten alloy used during atomization. In the detailed description of the present invention, unless one embodiment is particularly limitedly described, all detailed descriptions correspond to both one embodiment (magnetic particle (I)) and another embodiment (magnetic particle (II)).

In the detailed description of the present invention, an AlNiCo-based may refer to an alloy containing Al, Ni, and Co, and an AlNiCo-based magnetic particle may refer to a hard magnetic alloy particle or a magnetic particle for security used for securing securities. A hard magnetic particle is difficult to magnetize, but once magnetized, is difficult to demagnetize, and may refer to a magnetic particle having a higher coercivity (He) and a higher residual magnetization density (Mr) than a soft magnetic particle. In the AlNiCo-based magnetic particle, hard magnetism may refer to a magnetic property having a coercivity of 100 to 500 Oe. In contrast, a soft magnetic particle refers to a magnetic particle which is easily magnetized by a relatively weak magnetic field, and when an external magnetic field is removed, magnetism is rapidly lost over time. Soft magnetism may refer to a magnetic property having a coercivity of 10 to 90 Oe.

In the detailed description of the present invention, a water-based atomization process may refer to a process or a production method using a cooling medium including water during atomization of a molten alloy through a nozzle or the like. Here, the water-based atomization process should not be limitedly interpreted as a method using only water as a medium, and should be interpreted as also including a case of using both water and gas (as an example, inert gases such as $N_2$, Ar, He, and Ne).

In the detailed description of the present invention, the AlNiCo-based particle may refer to a magnetic particle group, that is, an aggregate of individual magnetic particles, and may refer to a group of individual magnetic particles which are independent of each other, excluding an aggregate of aggregated magnetic particles or an aggregate of aggregated core particles. Here, a "group" means a group of the number of magnetic particles, in which average magnetic properties and the like are not changed at least by the number of the magnetic particles forming the "group". That is, the "group" may refer to a group consisting of magnetic particles having a size (number) or more that is enough to constantly show the magnetic properties of the magnetic particle group. In another sense, the "group" may refer to a particle group having a size that is enough to obtain an average size, an average composition, and a variance value which are all reliable. In terms of the detailed description, the AlNiCo-based magnetic particle refers to a particle group consisting of at least 50 or more, specifically at least 100 or more, more specifically at least 300 or more, more specifically at least 500 or more, and still more specifically at least 1000 or more magnetic particles. In a production method, the AlNiCo-based magnetic particle may refer to a group of magnetic particle(s) which is (are) produced using particle(s), integrally obtained by atomization of an AlNiCo-based molten alloy having a composition designed using a refrigerant containing water, that is, integrally obtained by a single water-based atomization process, as a core particle.

The Al-based magnetic particle (I) according to an embodiment of the present invention is a magnetic particle having a suppressed composition deviation among magnetic particles, and specifically, the AlNiCo-based magnetic particle (I) according to the present invention is a hard magnetic particle including: a core particle containing Al, Ni, and Co; and an inorganic shell covering the core particle, wherein the core particle is an ultrafine particle having $D_{50}$ of 12 $\mu$m or less, the $D_{50}$ being a particle size corresponding to 50% in a particle size cumulative distribution of the core particles, and the core particle has a composition uniformity of the following Equations 1, 2, and 3:

$$\text{Equation 1: } 10 \leq \text{UNF (Al)}$$

$$\text{Equation 2: } 10 \leq \text{UNF (Ni)}$$

$$\text{Equation 3: } 10 \leq \text{UNF (Co)}$$

wherein UNF (Al) is a value obtained by dividing an average Al composition among the core particles by a standard deviation of an Al composition, based on the % by weight of the composition, UNF (Ni) is a value obtained by dividing an average Ni composition among the core particles by a standard deviation of a Ni composition, based on the % by weight of the composition, and UNF (Co) is a value obtained by dividing an average Co composition among the core particles by a standard deviation of a Co composition, based on the % by weight of the composition.

That is, UNF (Al) is a value obtained by dividing an average Al composition (average % by weight of Al) among the core particles by a standard deviation of an Al composition (standard deviation of the % by weight of Al among the core particles), based on the % by weight of the composition with a total weight of the core particles as 100%, UNF (Ni) is a value obtained by dividing an average Ni composition (average % by weight of Ni) among the core particles by a standard deviation of a Ni composition (standard deviation of the % by weight of Ni among the core particles), based on the % by weight of the composition with a total weight of the core particles as 100%, and UNF (Co) is a value obtained by dividing an average Co composition (average % by weight of Co) among the core particles by a standard deviation of a Co composition (standard deviation of the % by weight of Co among the core particles), based on the % by weight of the composition with a total weight of the core particles as 100%.

As described above, the magnetic particle may refer to a magnetic particle group, and in Equations 1, 2, and 3, the average Al composition (or Ni composition or Co composition) of the core particles may refer to an average value of an Al composition (or Ni composition or Co composition) which is an Al content based on the % by weight of each core particle of the magnetic particles forming the magnetic particle group, and the standard deviation of the Al composition (or the standard deviation of the Ni composition or the standard deviation in the Co composition) may refer to the standard deviation of the Al composition (or the Ni composition or the Co composition) of each core particle of the magnetic particles forming the magnetic particle group, of course. In addition, in UNF of any element, since UNF is increased as the uniformity of the composition is increased, there is no use of limiting the upper limit of UNF, but the upper limit of UNF is up to 200.

The composition uniformity of the AlNiCo-based magnetic particles satisfying Equations 1, 2, and 3 is a composition uniformity of the AlNiCo-based particles which is not obtainable by a conventionally known gas atomization process and a conventional water atomization process in which oxidation by water occurs, and is a composition uniformity which has not been reported in AlNiCo-based magnetic particles having an average particle of a several micrometer level and hard magnetic properties which prevent the magnetic particles from being distinguishable from soft magnetic particles by general recognition equipment and allow the magnetic particles to be distinguishably detectable from soft magnetic particles by high-priced recognition equipment.

As described above, the AlNiCo-based magnetic particle according to the present invention is characterized by a magnetic particle aggregate having a significantly low composition deviation, in which the core particle is an ultrafine particle having $D_{50}$ of 12 $\mu$m or less and simultaneously the composition uniformity which is a main factor determining the magnetism uniformity of the AlNiCo-based magnetic particles satisfies Equations 1, 2, and 3, whereby even when a fine line security element is designed, the magnetic particles are stably and reproducibly recognizable without damage to a shape on which the security element is designed, and even when the fine line security element is present in a mixed state with a paramagnetic particle-based security element, the magnetic particles are stably distinguished/recognized, thereby significantly improving security. The AlNiCo-based magnetic particle according to a more characteristic and advantageous example may satisfy UNF (Al) of 11 or more, UNF (Ni) of 40 or more, and UNF (Co) of 30 or more. By the high degree of composition uniformity as such, the AlNiCo-based magnetic particle may show highly uniform magnetic properties.

The magnetic particle according to another embodiment of the present invention is a magnetic particle (II) having the designed composition, that is, substantially the same composition as the composition of the molten alloy used during atomization, in combination with the embodiment described above or independently of the embodiment described above. Specifically, the magnetic particle (II) according to another embodiment of the present invention is a hard magnetic particle including: a core particle containing Al, Ni, and Co; and an inorganic shell covering the core particle, wherein the core particle is an ultrafine particle having $D_{50}$ of 12 $\mu$m or less, the $D_{50}$ being a particle size corresponding to 50% in a particle size cumulative distribution of the core particles, and the core particle is produced by an atomization process using a refrigerant containing at least water and has a composition satisfying the following Equations 4, 5, and 6, based on a designed composition which is a composition of a molten alloy containing Al, Ni, and Co used during atomization:

$$\frac{|C_m(Al) - C_0(Al)|}{C_0(Al)} \times 100 \leq 6$$

Equation 4:

$$\frac{|C_m(Ni) - C_0(Ni)|}{C_0(Ni)} \times 100 \leq 3$$

Equation 5:

$$\frac{|C_m(Co) - C_0(Co)|}{C_0(Co)} \times 100 \leq 4$$

Equation 6:

in Equation 4, wherein $C_m$ (Al) is an average Al composition among the core particles, based on the % by weight of the composition, $C_0$ (Al) is an Al composition of the designed composition, based on the % by weight of the composition, $C_m$ (Ni) is an average Ni composition among the core particles, based on the % by weight of the composition, $C_0$ (Ni) is a Ni composition of the designed composition, based on the % by weight of the composition, $C_m$ (Co) is an average Co composition among the core particles, based on the % by weight of the composition, and $C_0$ (Co) is a Co composition of the designed composition, based on the % by weight of the composition. That is, in Equation 4, $C_m$ (Al) corresponds to the average Al composition described above regarding Equation 1, in Equation 5, $C_m$ (Ni) corresponds to the average Ni composition described above regarding Equation 2, and in Equation 6, $C_m$ (Co) corresponds to the average Co composition defined in Equation 3. In addition, $C_0$ (Al) may be the % by weight of Al contained in the molten AlNiCo-based alloy used in atomization, $C_0$ (Ni) may be the % by weight of Ni contained in the molten AlNiCo-based alloy used in atomization, and $C_0$ (Co) may be the % by weight of Co contained in the molten AlNiCo-based alloy used in atomization. Here, in order to improve the composition uniformity, it is advantageous that the molten alloy is obtained by melting and solidifying metal powders forming an alloy depending on a previously determined composition in an inert atmosphere to produce an ingot, and melting the produced ingot in an inert atmosphere. In the case of an advantageous example, the designed composition which is the composition of a molten alloy may be a composition based on a mixture of metal powders forming an alloy for ingot production. However, the designed composition may not be interpreted limitedly only by the composition based on the mixture of the raw metal powders, and may mean the composition of the ingot itself, or the composition of the ingot melted for atomization (molten alloy) itself, of course.

As in Equations 4, 5, and 6, the AlNiCo-based magnetic particle according to the present invention is characterized in that the composition of the core particle determining the magnetism property is substantially the same as the designed composition, and the magnetic particle has a suppressed deviation from the designed composition.

In terms of the production method, the core particle having substantially the same composition as the designed composition satisfying Equations 4, 5, and 6 may be produced, and furthermore, the composition uniformity satisfying Equations 1, 2, and 3 may be secured, only when the ingot and the molten alloy are produced under an inert atmosphere, simultaneously rapid cooling by a water-based refrigerant (refrigerant containing water) is performed during atomization of the molten alloy to prevent segregation, and simultaneously a composition change by oxidation in a spraying process by an antioxidant contained in a water-based refrigerant, in particular an interparticle composition change by oxidation of a highly oxidative element such as Al is prevented.

The magnetic particle according to the present invention may include the two embodiments described above, in both sides of a deviation from the designed composition and the composition deviation among particles, but these two embodiments should not be interpreted as being only independent of each other, and the present invention should be interpreted as including the magnetic particles which belong to both the first embodiment and the second embodiment, of course.

That is, the magnetic particle according to an exemplary embodiment of the present invention is a hard magnetic particle including: a core particle containing Al, Ni, and Co; and an inorganic shell covering the core particle, wherein the core particle is an ultrafine particle having $D_{50}$ of 12 μm or less, the $D_{50}$ being a particle size corresponding to 50% in a particle size cumulative distribution of the core particles, the core particle has a composition uniformity of Equations 1, 2, and 3, the core particle is produced by an atomization process using a refrigerant containing at least water, and the core particle has a composition satisfying the following Equations 4, 5, and 6, based on a designed composition which is a composition of a molten alloy containing Al, Ni, and Co used during atomization.

The core particle only has to be an alloy containing aluminum (Al), nickel (Ni), and cobalt (Co) having excellent coercivity, saturation magnetization, and residual magnetization. As a specific example, the core particle may contain one or two or more fourth elements selected from Fe, Cu, Ti, and Si; and other inevitable impurities. As a specific and substantial example, the core particle may be an AlNiCo-based alloy containing Al, Ni, and Co and containing one or more non-iron-based selected from the group consisting of Cu, Si, and Ti; an iron-based containing Fe; and other inevitable impurities.

Like the composition uniformity of Al, Ni, and Co, the AlNiCo-based magnetic particle has a characteristic of extremely uniformly containing the fourth element also. Specifically, the core particle has a composition uniformity of a value of 10 or more, the value being obtained by dividing an average fourth element composition (content based on a % by weight) by a standard deviation of a fourth element composition, based on the % by weight of the composition. That is, UNF (fourth element) may be 10 or more, UNF (fourth element) may be a value obtained by an average fourth element composition (% by weight of average fourth element) among the core particles by a standard deviation of a fourth element composition (standard deviation of the % by weight of the fourth element), based on the % by weight of the composition, and when the fourth element is two or more elements, UNF (fourth element) may be 10 or more for each of the two or more elements. Here, the average fourth element composition among the core particles may refer to an average value of the fourth element composition for each of the core particles of the magnetic particles forming the magnetic particle group, and the standard deviation of the fourth element composition may refer to a standard deviation in the fourth element composition for each of the core particles of the magnetic particles forming the magnetic particle group, of course.

As a substantial example, the core particle may further contain Ti, Fe, and Cu, together with Al, Ni, and Co, and each of UNF (Ti) in which the fourth element is Ti, UNF (Fe) in which the fourth element is Fe, and UNF (Cu) in which the fourth element is Cu may be 10 or more. As a more substantial example, UNF (Ti) may be 15 or more, UNF (Fe) may be 35 or more, and UNF (Cu) may be 30 or more.

That is, in a substantial and advantageous example, the core particle may contain Ti, Fe, and Cu, together with Al, Ni, and Co, and has a high degree of composition uniformity satisfying UNF (Al) of 11 or more, UNF (Ni) of 40 or more, UNF (Co) of 30 or more, UNF (Ti) of 15 or more, UNF (Fe) of 35 or more, and UNF (Cu) of 30 or more.

In the AlNiCo-based magnetic particles according to a substantial and advantageous example, the core particle may contain 4 to 12% of Al, 10 to 20% of Ni, 15 to 25% of Co, 1 to 10% of Ti, 0.5 to 5% of Cu, a remainder of Fe, and other inevitable impurities, based on the % by weight of the composition with a total weight of the core particles as 100%. In the AlNiCo-based magnetic particle according to another substantial and advantageous example, the core particle may further contain 4 to 12% of Al, 10 to 20% of Ni, 15 to 25% of Co, 1 to 10% of Ti, 0.5 to 5% of Cu, 0.1 to 1% of Si, a remainder of Fe, and other inevitable impurities. Here, the composition of the core particle refers to an average % by weight obtained by averaging % by weight of one element contained in each of the core particles of the magnetic particles forming the magnetic particle group, and may correspond to the composition of an average one element used when UNF of one element is defined.

The core particle may contain 4 to 12% by weight, advantageously 5 to 10% by weight, and more advantageously 6 to 9% by weight of Al. When the content of Al satisfies the composition range, an effect of preventing sintering in a subsequent heat treatment for segregation removal and magnetic property control is sufficient to maintain the shape of the fine particles secured by a water spraying process, deterioration of the mechanical physical properties of the core particles is advantageously prevented, and saturation magnetization and residual magnetization properties may be also advantageously improved.

The core particle may contain 10 to 20% by weight, advantageously 12 to 18% by weight, and more advantageously 13 to 16% by weight of Ni. When the content of nickel satisfies the composition range, both coercivity and residual magnetization may be increased, which is advantageous.

The core particle may contain 15 to 25% by weight, advantageously 17 to 25% by weight, and more advantageously 17 to 23% by weight of Co. When the content of the cobalt satisfies the composition range, coercivity may be increased, which is advantageous, and is advantageous for cost reduction.

Ti and Cu may further improve the coercivity of an Al-Ni-Co alloy. The core particle may contain 1 to 10% by weight, advantageously 2 to 8% by weight, and more advantageously 3 to 6% by weight of Ti, so that the coercivity may be improved. In addition, the core particle may contain 0.5 to 5% by weight, advantageously 1 to 4% by weight, and more advantageously 1 to 3% by weight of Cu, so that the coercivity may be improved.

The core particles may contain 0.1% by weight or more of Si so as to be advantageous for deoxidation in molten alloy production and a stable shape of fine particles in molten alloy spraying, but preferably, the core particles contain 1% by weight or less of Si so that the magnetic properties are not deteriorated. Specifically, the core particles may contain 0.4 to 0.7% by weight of Si, in terms of deoxidation, fine particle shape maintenance, and magnetic property deterioration suppression. However, as shown in the exemplary embodiment, when an ingot is produced in an inert atmosphere, the ingot is melted in an inert atmosphere to produce a molten alloy, and a refrigerant (cooling medium) containing an antioxidant with water is used during molten alloy spraying, oxidation may be sufficiently suppressed in a granulation process of the molten alloy, and thus, magnetic particles having the composition uniformity described above and substantially the same composition as the designed composition may be produced, while the molten alloy does not contain a deoxidizer such as Si which deteriorates magnetic properties.

In the AlNiCo-based magnetic particles according to an exemplary embodiment of the present invention, the core particle may further satisfy the following Equations 7 and 8:

$$\text{Equation 7: } 3 \ \mu m \leq D_{50} \leq 12 \ \mu m$$

$$\text{Equation 8: } 10 \ \mu m \leq D_{90} \leq 20 \ \mu m$$

wherein $D_{50}$ is a particle size corresponding to 50% in a particle size cumulative distribution of the core particles, as described above, and $D_{90}$ is a particle size corresponding to 90% in a particle size cumulative distribution of the core particles. Substantially, $D_{50}$ may be 3 to 9 $\mu m$, and $D_{90}$ may be 10 to 15 $\mu m$.

When the core particle may be an ultrafine particle having $D_{50}$ of 12 $\mu m$ or less, the particle size distribution may influence the magnetic properties. When the AlNiCo-based magnetic particle satisfies Equations 7 and 8, printability may be secured, printing defects such as nozzle blockage in a printing process may be improved, and change in magnetic properties depending on a size deviation may be suppressed, whereby the AlNiCo-based particle may have more uniform magnetic properties.

In order to use a magnetic body as a security element, it is necessary to conceal a dark color specific to the magnetic particles. Thus, as suggested by the present applicant, the dark color specific to the magnetic particles may be concealed, using a technique of lightening the color of the magnetic body by covering the magnetic body with a particulate magnetic body metal shell (see Korean Patent Registration No. 1341150).

In the AlNiCo-based magnetic particle, the inorganic shell may serve to allow the AlNiCo-based magnetic particle to have a light color while concealing the dark color specific to the core particle containing Al, Ni, and Co.

Specifically, the inorganic shell may include a metal shell, and may further include a dielectric shell positioned on the upper portion of the metal shell (that is, on a surface side of the metal shell) and/or on the lower portion of the metal shell (on a core particle side of the metal shell). The dielectric shell may serve to improve binding strength between the metal shell and the core particles or protect the metal shell from the outside to improve durability.

It was confirmed from various prior experiments for a long period of time that the magnetic properties of the AlNiCo-based magnetic particles are significantly influenced by the uniformity of the metal shell which is a main component for color lightening also, together with the composition uniformity of the core particles and a particle size distribution.

Thus, in the AlNiCo-based magnetic particle according to an exemplary embodiment of the present invention, the inorganic shell may include a metal shell, and the metal shell may have a thickness uniformity satisfying the following Equations 9 and 10:

$$\text{Equation 9: } 50 \text{ nm} \leq t_m \leq 100 \text{ nm}$$

$$\text{Equation 10: } \sigma_t \leq 30 \text{ nm}$$

wherein $t_m$ is an average thickness of the metal shell, and $\sigma_t$ is a standard deviation of a metal shell thickness. Here, the average thickness and the standard deviation of the thickness in Equations 9 and 10 are an average thickness of the thickness depending on the position of one metal shell covering one core particle, and a standard deviation of the thickness of one metal shell, based on one magnetic particle, respectively. Each of the magnetic particles belonging to the AlNiCo-based magnetic particle group may satisfy Equations 9 and 10.

That is, each of the magnetic particles belonging to the AlNiCo-based magnetic particle group may have an average thickness of the metal shell of 50 to 100 nm, and simultaneously, each of the magnetic particles belonging to the AlNiCo-based magnetic particle group may have a deviation of a metal shell thickness within 30 nm, substantially of 1 nm to 10 nm.

The metal shell may be one or two or more metals selected from copper, nickel, gold, platinum, silver, aluminum, and chromium, silver is more effective for color lightening, and furthermore, a silver shell is more advantageous since it may impart infrared reflectivity to the AlNiCo-based magnetic particles.

The dielectric shell positioned on the upper portion, on the lower portion, or the upper and lower portions of the metal shell, respectively may be one or two or more dielectrics selected from titanium oxide, silicon oxide, aluminum oxide, zinc oxide, zirconium oxide, calcium carbonate, magnesium fluoride, and zinc sulfide. The thickness of the dielectric shell may be 10 to 100 nm, in terms of stably improving durability and further improving color lightening, but is not limited thereto.

The AlNiCo-based magnetic particle according to an exemplary embodiment of the present invention may have a coercivity of 100 to 500 Oe, a saturation magnetization (Ms) of 50 to 150 emu/g, and a residual magnetization (Mr) may be 10 to 40 emu/g. Specifically, the AlNiCo-based magnetic particle may have a coercivity of 100 to 500 Oe, a saturation magnetization (Ms) of 50 to 70 emu/g, and a residual magnetization (Mr) of 15 to 30 emu/g. The magnetic properties of the coercivity, the saturation magnetization, and the residual magnetization are magnetic properties to secure enhanced security performance so that the magnetic particles are not distinguished from the soft magnetic particles by general recognition equipment but are distinguishably detectable from the soft magnetic particles by high-priced recognition equipment.

The AlNiCo-based particle has a designed composition which is precisely designed for securing the composition uniformity and designed magnetism described above, and advantageously, has the composition uniformity, the designed composition, the uniformity of a particle size, and the uniformity of a metal shell thickness, whereby a security element which is designed into a high degree of shape such as a fine line shape may be also reproducibly, stably, and distinguishably detected from soft magnetic particles by high-priced recognition equipment to greatly improve the security properties.

Furthermore, the magnetic particle generally has an infrared absorption property, but the AlNiCo-based magnetic particle according to an advantageous exemplary embodiment of the present invention may have an infrared reflecting property. Furthermore, the AlNiCo-based magnetic particle according to an advantageous exemplary embodiment of the present invention may have a metal shell having a very low surface roughness with a uniform thickness to have a very excellent infrared reflectance so that 60% or more infrared rays are reflected at a wavelength of 900 nm (infrared rays at a wavelength of 900 nm). This means that the magnetic particle according to an exemplary embodiment of the present invention allows implementation of a security element having a high degree of shape including a fine line shape, together with magnetic properties to prevent the magnetic particles from being detectable distinguishably from soft magnetic particles by general recognition equipment, and may have a security property of high infrared reflection. That is, this means that multiple security such as magnetic properties, security patterns (shape of security element), and infrared rays is performed by the AlNiCo-based magnetic particles which are a single material. In particular, the AlNiCo-based magnetic particle according to an exemplary embodiment of the present invention allows implementation of soft magnetic properties with substantially the same composition and is not distinguished from soft magnetic particle by a common composition analysis apparatus and a general magnetism recognition apparatus, and thus, it is substantially impossible to forge the security element.

The present invention includes a method of producing the AlNiCo-based magnetic particle described above. The production method according to the present invention includes all descriptions for the AlNiCo-based magnetic particle described above.

In the production method of the present invention, the terms, a cooling medium containing water, water-based spraying, and/or a water-based cooling medium should be interpreted as containing at least water, should not be interpreted as the cooling medium consisting of a liquid, and should be interpreted as including the case in which the cooling medium includes a gas phase of inert gas with water.

The method of producing AlNiCo-based magnetic particles according to the present invention includes: a) melting and solidifying a raw material including Al, Ni, and Co in an inert atmosphere to produce an ingot; b) melting the produced ingot in an inert atmosphere and producing fine particles by atomization using a cooling medium containing water and an antioxidant; c) heat-treating the produced fine particles; d) subjecting the heat-treated fine particles to airflow classification to produce AlNiCo-based core particles having $D_{50}$ of 12 $\mu$m; and e) forming an inorganic shell on the produced AlNiCo-based core particles.

As described above, when a gas atomization method is used, a cooling rate is low so that production of particles having uniform magnetic properties is substantially very difficult, and furthermore, an yield of ultrafine particles having a size required for printing (as an example, $D_{50} \leq 12\mu$m) is only about 5%, and thus, the gas atomization method is inappropriate for mass production.

Since the production method according to the present invention uses a cooling medium containing water, rapid cooling is possible and ultrafine particles having a dense texture which may be rapidly cooled and are prevented from being segregated may be produced with a very excellent yield (as an example, 35% or more), and since the cooling medium contains an antioxidant, highly oxidative certain elements are prevented from being heterogeneously oxidized from produced particles by water, thereby producing core particles having an excellent composition uniformity (low composition deviation) and a designed composition, as described above.

Since the composition deviation is caused by heterogeneous oxidation of highly oxidative elements (as an example, Al, Ti, and the like), ingoting by melting a raw material in an inert gas atmosphere (step a) ) and remelting of the ingot for spraying in an inert atmosphere (step b)) are performed, thereby suppressing composition deviation occurrence until immediately before the spraying step, and a water-based cooling medium containing an antioxidant is used during spraying, thereby suppressing composition deviation occurrence in the spraying process.

Thereafter, the fine particles produced by spraying may be heat-treated to improve coercivity, and the heat-treated fine particles are subjected to airflow classification to produce core particles having a very narrow size distribution with $D_{50}$ being 12 $\mu$m or less, preferably $D_{50}$ and $D_{90}$ satisfying Equations 7 and 8 and having an ultrafine size.

In addition, after the core particles are produced, when a metal shell is formed in an inorganic shell formation step, the metal shell is formed using electroless plating at a low temperature of 5°C or less, specifically 1 to 5°C, thereby producing a metal film which satisfies Equations 9 and 10 so as to be thin and uniform and has a very low surface roughness.

Hereinafter, the production method will be described in detail, but in the detailed description of the production method, the size, distribution, composition, element content, and magnetic properties of the core particle, and the material and thickness of the inorganic shell, and the like are similar or identical to those described above for the AlNiCo-based magnetic particles. Thus, the method of producing AlNiCo-based magnetic particles includes all descriptions for the AlNiCo-based magnetic particle described above.

An ingot may be produced by melting a raw material which is a mixture of powder of each element including Al, Ni, and Co so as to have the same composition as the composition of the designed core particles in an inert atmosphere to produce a molten alloy, and cooling the produced molten alloy in an inert atmosphere. However, when the core particles contain iron, medium carbon steel (containing 0.15 to 0.3% by weight of C) having an antioxidation effect may be used instead of iron powder, but since ingoting and melting are performed in an inert atmosphere and spraying is performed by a water-based cooling medium containing an antioxidant, the medium carbon steel is not necessarily required and may be selectively used. Thus, the present invention is not limited to the kind of iron raw material, of course. Accordingly, the ingot may be an AlNiCo alloy ingot containing Al, Ni, and Co, and specifically, may be an AlNiCo alloy ingot containing one or two or more elements selected from Fe, Cu, Si, and Ti and other inevitable impurities, together with Al, Ni, and Co. More substantially, the ingot may be an AlNiCo alloy ingot containing Ti, Fe, Cu, and other inevitable impurities, together with Al, Ni, and Co. As another substantial example, the ingot may be an AlNiCo alloy ingot containing Ti, Fe, Cu, Si, and other inevitable impurities, together with Al, Ni, and Co.

The composition of the raw material, the composition of the ingot, or the composition of the molten alloy which corresponds to the designed composition according to a substantial and advantageous example may contain 4 to 12% of Al, 10 to 20% of Ni, 15 to 25% of Co, 1 to 10% of Ti, 0.5 to 5% of Cu, a remainder of Fe, and other inevitable impurities, based on % by weight. The composition of the raw material, the composition of the ingot, or the composition of the molten alloy which corresponds to the designed composition according to another substantial and advantageous example may contain 4 to 12% of Al, 10 to 20% of Ni, 15 to 25% of Co, 1 to 10% of Ti, 0.5 to 5% of Cu, 0.1 to 1% of Si, a remainder of Fe, and other inevitable impurities, based on % by weight with a total weight of the core particles as 100%.

Here, the composition of the raw material, the composition of the ingot, or the composition of the molten alloyalloy which corresponds to the designed composition may contain 4 to 12% by weight, advantageously 5 to 10% by weight, and more advantageously 6 to 9% by weight of Al. In addition, the composition of the raw material, the composition of the ingot, or the composition of the molten alloy which corresponds to the designed composition may contain 10 to 20% by weight, advantageously 12 to 18% by weight, and more advantageously 13 to 16% by weight of Ni. In addition, the composition of the raw material, the composition of the ingot, or the composition of the molten alloy which corresponds to the designed composition may contain 15 to 25% by weight, advantageously 17 to 25% by weight, and more advantageously 17 to 23% by weight of Co. In addition, the composition of the raw material, the composition of the ingot, or the composition of the molten alloy which corresponds to the designed composition may contain 1 to 10% by weight, advantageously 2 to 8% by weight, and more advantageously 3 to 6% by weight of Ti. In addition, the composition of the raw material, the composition of the ingot, or the composition of the molten alloy which corresponds to the designed composition may contain 0.5 to 5% by weight, advantageously 1 to 4% by weight, and more advantageously 1 to 3% by weight of Cu. In addition, the composition of the raw material, the composition of the ingot, or the composition of the molten alloy which corresponds to the designed composition may contain 0.1% by weight or more, specifically 0.4 to 0.7% by weight of Si, but for the same reason as described above for carbon steel, Si may be selectively used if required.

Ingot melting in step b) may be a process of melting an ingot in an inert atmosphere, and specifically, may be a process of melting an ingot by induction heating for high frequency, but is not limited to a specific heating method as long as melting is performed in an inert atmosphere in which oxidation is prevented. As a specific and non-limiting example, the temperature during high frequency melting in an inert atmosphere may be 1300 to 1800°C.

Spraying in step b) may be performed using a water-based cooling medium containing water and an antioxidant, by spraying the water-based cooling medium with a ring-shaped jet nozzle.

When a melted ingot which is melted for spraying is referred to as an AlNiCo-based molten alloy, the water-based cooling medium may contain water and an antioxidant for suppressing oxidation during granulation of the AlNiCo-based molten alloy by a water-based fluid, and the antioxidant may include one or two or more selected from reducing organic solvents and reducing organic compounds. In particular, the antioxidant may contain a reducing organic compound including urea, and when spraying is performed by the water-based cooling medium containing urea and water, heterogeneous oxidation may be significantly suppressed during granulation of the AlNiCo-based molten alloy to be granulation to produce the core particles satisfying Equations 1, 2, and 3 described above, and furthermore, oxidation itself may be significantly suppressed during granulation to produce the core particles which satisfy Equations 4, 5, and 6 and substantially conform to the designed composition.

Specifically, the cooling medium may contain 10 to 100 parts by weight, advantageously 15 to 100 parts by weight, and more advantageously 20 to 100 parts by weight of urea, based on 100 parts by weight of water, and the content of urea is a content at which oxidation by water and heterogeneous oxidation by water may be substantially completely suppressed during granulation of the AlNiCo-based molten alloy.

However, the antioxidant contained in the cooling medium in the present invention is not interpreted as being limited to urea alone, and if necessary, the cooling medium may further contain a reducing organic solvent, together with the reducing organic compound including urea described above. As the reducing organic solvent, alkanolamine having excellent compatibility with water, a high boiling point, and excellent reducibility is advantageous, and alkanolamine may include monoethanolamine (MEA), diethanolamine (DEA), triethanolamine (TEA), monoisopropylamine (MIPA), diisopropylamine (DIPA), or a mixture thereof, but the present invention is not limited thereto.

When the cooling medium further contains the reducing organic solvent, the cooling medium may contain 30 parts by weight or less, specifically 1 to 30 parts by weight, and more specifically 5 to 20 parts by weight of the reducing organic solvent, based on 100 parts by weight of water, so that a quenching effect by water is not impaired, but the present invention is not limited thereto.

In addition, the cooling medium further contains a gas phase including inert gas, a volume ratio of the gas phase including water:inert gas may be in a range of 1:0.05 to 0.3 so that a quenching effect by water to prevent production of segregation and an undesired abnormal phase (as an example, Al-rich phase) is maintained.

It is advantageous for production of ultrafine particles having $D_{50}$ of 12 $\mu$m or less that the atomization pressure of the cooling medium containing water and an antioxidant during spraying is 500 bar or higher. Specifically, in order to obtain ultrafine particles having $D_{50}$ of 12 $\mu$m or less with an excellent yield, the atomization pressure of the cooling medium may be 500 to 1000 bar, more specifically 500 to 800 bar.

The AlNiCo-based fine particles may be obtained by the spraying process described above, and a step of heat-treating the produced AlNiCo-based fine particles by spraying may be performed. In the case of a gas atomization method, heat treatment should be performed so that magnetic properties are improved and segregation and an undesired abnormal phase (as a specific example, a $\gamma$ phase) caused by slow cooling are removed, but in the case of the AlNiCo-based fine particles obtained by the production method according to an exemplary embodiment of the present invention, since segregation and phase separation (formation of an abnormal phase) are prevented by quenching, heat treatment in an advantageous condition for improving the magnetic properties of the AlNiCo-based fine particles is sufficient. Specifically, the heat treatment of step c) may be performed at a temperature of 700 to 800°C under a usual inert or reducing atmosphere. A heat treatment time is any period of time during which magnetic properties to be desired are improved and AlNiCo-based fine particles are not strongly bound to each other, and as a substantial example, heat treatment may be performed for 30 minutes to 2 hours, but the present invention is not limited to a specific time during which the heat treatment is performed, of course.

If necessary, multistage heat treatment of primary heat treatment at 700 to 800°C, secondary heat treatment at a lower temperature than the primary heat treatment, and then tertiary heat treatment at a lower temperature than the secondary temperature may be performed, and coercivity of the AlNiCo-based fine particles may be further improved by the multistage heat treatment. Specifically, if necessary, after primary heat treatment is performed at 700 to 800°C, secondary heat treatment may be performed at a temperature of 600 to 700°C (excluding 700°C) for 2 to 4 hours, and after secondary heat treatment is performed, tertiary heat treatment may be performed at 550 to 600°C (excluding 600°C) for 10 to 15 hours.

Step d) may be a step of producing core particles having $D_{50}$ of 12 $\mu$m or less by performing airflow classification on heat-treated fine particles. In cyclonic airflow classification, as is known, coarse particles move to an outer wall of a classifier by centrifugal force of high-speed airflow and fluid drag, rotate along a wall surface, and are collected, fine particles move to the center of (inner) classifier and are collected by rotating with air and being exhausted, and a classification point may be adjusted mainly by a rotating speed of the classifier and an air injection amount. Airflow classification allows precise classification of ultrafine particles and the classified particles to have a very narrow particle size distribution, and thus, is very appropriate for the present invention. As a specific and non-limiting example, in order to classify and collect core particles having $D_{50}$ of 12 $\mu$m or less, advantageously particles satisfying Equations 7 and 8, by airflow classification on fine particles subjected to gas atomization and multistage heat treatment, a rotating speed during airflow classification may be 2500 to 8000 rpm, and an air injection amount may be 2 to 10 $m^3$/min. However, it is clear that a person skilled in the art of controlling a particle size distribution by airflow classification may perform desired classification by controlling previously known main variables of the classifier in order to obtain particles to be desired having an average particle and distribution, depending on the specific structure of commercially available various airflow classifier.

The core particles having $D_{50}$ of 12 $\mu$m or less, advantageously particles satisfying Equations 7 and 8, which are obtained by airflow classification, are very appropriate for fine line pattern printing, and are advantageous, since difficulty problems such as printing defects which may occur in a printing process may be prevented and change in magnetic properties due to a particle size deviation may be prevented.

Step e) is a step of forming a shell on the core particles obtained by airflow classification, and may include a step of forming a metal shell. Specifically, step e) may include a step of forming a dielectric shell on the core particles; and a step of forming a metal shell on the dielectric shell, and if necessary, a step of forming the same kind or different kind of dielectric shell for protecting the metal shell on the metal shell may be further performed again, of course.

Any method which is commonly used for coating the particles with a dielectric may be used in the step of forming a dielectric shell, but it is advantageous to use a sol-gel method in terms of forming a thin and uniform film. Specifically, the step may be performed using an alkoxide sol-gel method or a colloid sol-gel method, considering a dielectric material of the shell to be formed, and as a specific and non-limiting example, when a titanium oxide shell is intended to form, core particles dispersed in a dispersion medium containing water are mixed with a titanium sol in which a titanium precursor such as titanium tetrabutoxide is dissolved, and then the core particles are separated, collected, and dried, thereby producing core particles on which a titanium oxide shell is formed.

Any method which is commonly used for coating particles with a metal may be used in the step of forming a metal shell, but it is advantageous to use electroless plating in terms of forming a thin and uniform film, and in particular, it is advantageous to form the metal shell using electroless plating at a low temperature of 5°C or less, specifically 1 to 5°C, so that a thin and uniform metal film satisfying Equations 9 and 10 is formed, and magnetic particles having a low surface roughness to have an extremely excellent infrared reflectance of 60% or more at a wavelength of 900 nm are produced. Various electroless plating solutions may be used considering metal materials of the metal shell. According to an advantageous example, when a silver shell is intended to form as the metal shell, a plating bath for electroless plating may include a silver precursor (as a representative example, silver nitrate and the like), a pH control agent (as a representative example, KOH and the like), a complex (as a representative example, ammonia water, ammonium salts, and the like), a solvent, a reducing agent, and the like. Here, the reducing agent may include monosaccharides, glucose, fructose, galactose, Seignette salt, sodium tartrates, potassium tartrates, potassium sodium tartrate, calcium tartrate, stearyl tartrate, formaldehyde, and the like. Here, the pH of the plating bath may be adjusted to 7 to 10 by the pH control agent, and the plating bath may further include known additives for uniform plating, of course.

The present invention includes an AlNiCo-based magnetic particle produced by the production method described above.

The present invention includes a security ink including the AlNiCo-based magnetic particles described above. Here, the security ink may be for securities, of course.

In the security ink according to an exemplary embodiment of the present invention, the security ink may include the AlNiCo-based magnetic particles described above, a varnish, a pigment, a surfactant, a wax, and a solvent.

Specifically, the security ink may include 5 to 15% by weight of the AlNiCo-based magnetic particles, 20 to 40% by weight of a varnish, 30 to 50% by weight of a pigment, 5 to 10% by weight of a surfactant, 1 to 10% by weight of a wax, and 2 to 10% by weight of a solvent, but is not limited thereto.

As an example, the varnish may be a thermoplastic resin, a thermocurable resin, or a photocurable resin, and the kind thereof is not limited as long as it is dissolved in an organic solvent. Specific examples of the varnish may include petroleum resin, casein, shellac, rosin modified maleic acid, rosin modified phenol resin, nitrocellulose, cellulose acetate butyrate, cyclized rubber, chlorinated rubber, oxidized rubber, hydrochloric acid rubber, phenol resin, alkyd resin, polyester resin, unsaturated polyester resin, amino resin, epoxy resin, vinyl resin, vinyl chloride resin, vinylidene chloride resin, vinylchloride acetate resin, ethylene vinyl acetate resin, acryl resin, methacryl resin, polyurethane resin, silicone resin, fluorine resin, drying oil, synthetic drying oil, styrene-maleic acid resin, styrene-acryl resin, polyamide resin, butyral resin, and the like, as the thermoplastic resin. As the thermocurable resin, epoxy resin, phenol resin, benzoguanamine resin, melamine resin, urea resin, and the like may be included. As the photocurable resin (photosensitive resin), a resin obtained by reacting cinnamic acid or a (meth) acryl compound having a reactive substituent such as an isocyanate group, an aldehyde group, an epoxy group, or the like with a linear polymer having a reactive substituent such as a hydroxyl group, a carboxyl group, or an amino group to introduce a photocrosslinkable group such as a (meth)acryloyl group or styryl group to the linear polymer, may be used. In addition, a product obtained by half-esterificating a linear polymer including a styrene-anhydrous maleic acid copolymerized product or an $\alpha$-olefin-anhydrous maleic acid copolymerized product by a (meth) acryl compound having a hydroxyl group such as hydroxyalkyl (meth)acrylate may be used.

The pigment is not particularly limited, and for example, may include soluble azo pigments, insoluble azo pigments, phthalocyanine pigments, halogenated phthalocyanine pigments, quinacridone pigments, isoindolinone pigments, isoindoline pigments, perylene pigments, perinone pigments, dioxazine pigments, anthraquinone pigments, dianthraquinonyl pigments, anthrapyrimidine pigments, andanthrone pigments, indanthrone pigments, flavanthrone pigments, pyranthrone pigments, or diketopyrrolopyrrole pigments, and the like.

The kind of surfactant is not limited, but any one or more selected from the group consisting of fluorosurfactants, polymerizable fluorosurfactants, siloxane surfactants, polymerizable siloxane surfactants, polyoxyethylene surfactants, derivatives thereof, and the like may be included.

The kind of wax is not limited as long as the wax is a powder type having an effect of decreasing tackiness of resin, and as an example, one or more selected from polyethylene wax, amide wax, erucamide wax, polypropylene wax, paraffin wax, Teflon and carnauba wax, and the like may be included, but the wax is not limited thereto.

The solvent is a general organic solvent and the kind thereof is not limited as long as the solvent may be uniformly mixed with materials such as wax, pigments, and varnish. As a specific example of usable solvents, any one or two or more selected from ethyl acetate, n-butyl acetate, isobutyl acetate, toluene, xylene, acetone, hexane, methylethyl ketone, cyclohexanone, propyleneglycol monomethyletheracetate, diethyleneglycol monoethyletheracetate, diethyleneglycol diethylether, diethyleneglycol monobutylether, dipropyleneglycol monomethyletheracetate, diethyleneglycol monoethylacetate, diethyleneglycol monobutyletheracetate, and the like may be included.

The present invention includes securities including the AlNiCo-based magnetic particles described above.

Specifically, the present invention includes securities such as notes, checks, stamps, gift cards, certificate stamps, and bonds. Here, the security element including the AlNiCo-based magnetic particles may have a form designed for security such as images (including a partial shape forming the image), numbers, letters, and geometric patterns, of course.

(Examples)

Raw material powders (aluminum powder, nickel powder, cobalt powder, titanium powder, copper powder, and iron powder, purity of raw material powder≥99.9%) were mixed according to a designed composition of 6% by weight of Al, 15% by weight of Ni, 22% by weight of Co, 4% by weight of Ti, 3% by weight of Cu, and 50% by weight of Fe, dissolved in an inert atmosphere, and solidified to produce an ingot. 1 kg of the produced ingot was placed in a crucible which was heated by a high frequency generator and placed in an inert atmosphere, and the temperature was maintained at 1650°C to form an AlNiCo-based molten alloy. For fine particle formation, the molten alloy was injected by a vacuum atomization confinement, and a cooling medium which is an aqueous urea solution in which 25% by weight of urea was dissolved was sprayed at 600 bar through a circular atomization nozzle.

The produced fine particles were heat-treated at 750°C for 1 hour under an argon gas atmosphere.

The particles obtained after the heat treatment was subjected to airflow classification in a cyclonic manner under the conditions of a rotating speed of 7500 rpm and an air injection amount of 2.8 m³/min to obtain core particles having $D_{50}$ of 7.8 μm and $D_{90}$ of 14.1 μm. Thereafter, the core particles obtained by airflow classification were washed twice with ethanol and then dried at 60°C.

After 1 g was randomly sampled from the obtained core particles, the center area of the particle section was subjected to elemental analysis (10 kV, 100 sec) by Energy Dispersive X-Ray Spectroscopy (EDS, FEI company, Magellan 400), each of 50 particles was subjected to elemental analysis, an average composition for each element and a standard deviation of the composition were calculated, and the results are summarized in Table 1 (Al, Ni, and Co analysis results in Table 1-1 and Ti, Cu, and Fe analysis results in Table 1-2) . In addition, values defined in Equations 4, 5, and 6, that is, degrees deviated from the designed composition are summarized and shown in Table 2 as "DEV".

Separately, for the washed core particles, 1 g of the core particles, 1 ml of tetrabutoxy titanium (TBOT, Aldrich), and 1 ml of distilled water was added to 170 ml of ethanol, and then stirred at a temperature of 85°C for 2 hours at a rotating speed of 300 rpm to coat the surface of the core particles with a titanium oxide shell (at a thickness of 50 nm). The core particles coated with the titanium oxide shell was separated with a magnet and collected, and then washed twice with ethanol and dried.

Thereafter, 21 g of silver nitrate (AgNO₃) and 4 g of sodium hydroxide (NaOH) were added to 1200 ml of distilled water, 34 ml of ammonium hydroxide (NH₄OH) was added, and the solution was stirred so that brown precipitate changed to a transparent silver amine complex solution. After 60 g of the core particles coated with a titanium oxide shell was added to a silver amine complex solution which was maintained at 3°C, the solution was stirred for 30 minutes at a speed of 300 rpm. A solution (3°C) in which 20 g of glucose and 1.5 g of potassium tartrate were dissolved in 400 ml of distilled water was added to a silver amine complex solution (3°C) in which the core particles coated with a titanium dioxide shell are dispersed, and then the solution was stirred at a speed of 300 rpm for 1 hour to form a silver shell having a thickness of 58.4 nm on the core particles on which a titanium oxide shell was formed, thereby producing AlNiCo-based magnetic particles. Thereafter, the produced magnetic particles were separated by a magnet, washed twice with ethanol, and dried at 60°C.

The coercivity, saturated magnetization (Ms), and residual magnetization (Mr) were measured using a vibrating sample magnetometer (VMS, Lakeshore, 7400 series), and the results are summarized in Table 3.

(Comparative Example 1)

Core particles were produced in the same manner as in Example 1, except that water was used as a cooling medium during spraying, and then magnetic particles were produced in the same manner as in Example 1, except that a solution at room temperature was used during producing a silver shell.

For the core particles produced in Comparative Example 1 also, the composition uniformity of the core particles was confirmed like Example 1, which is summarized in Table 1, and the values defined in Equations 4, 5, and 6, that is, degrees deviated from the designed composition are summarized and shown in Table 2 as "DEV". In addition, the magnetic properties of the produced magnetic particles were measured in the same manner as in Example 1 and are summarized and shown in Table 3.

(Table 1-1)

| | Al | | | Ni | | | Co | | |
|---|---|---|---|---|---|---|---|---|---|
| | $C_m(Al)$ | $\sigma(Al)$ | UNF(Al) | $C_m(Ni)$ | $\sigma(Ni)$ | UNF(Ni) | $C_m(Co)$ | $\sigma(Co)$ | UNF(Co) |
| Example 1 | 6.08 | 0.54 | 1125 | 14.89 | 0.35 | 42.54 | 22.15 | 0.68 | 32.57 |
| Comparative Example 1 | 5.02 | 0.91 | 4.56 | 14.72 | 0.86 | 17.11 | 22.51 | 1.91 | 11.78 |

(Table 1-2)

| | Ti | | | Cu | | | Fe | | |
|---|---|---|---|---|---|---|---|---|---|
| | $C_m(Ti)$ | $\sigma(Ti)$ | UNF(Ti) | $C_m(Cu)$ | $\sigma(Cu)$ | UNF(Cu) | $C_m(Fe)$ | $\sigma(Fe)$ | UNF(Fe) |
| Example 1 | 4.18 | 0.24 | 1741 | 2.98 | 0.09 | 33.11 | 49.52 | 1.20 | 4126 |
| Comparative Example 1 | 3.64 | 0.99 | 3.67 | 2.94 | 0.12 | 24.5 | 51.04 | 1.48 | 34.48 |

In Table 1 (Tables 1-1 and 1-2), $C_m(A)$ is an average % by weight of element A of the core particles, $\sigma(A)$ is a standard deviation of element A among the core particles (% by weight), and UNF (A) is $C_m(A)/\sigma(A)$. In addition, in Table 1, the reason why the sum of $C_m$ among elements is not 100 is due to inevitable impurities.

As seen from Table 1, it was found that the AlNiCo-based magnetic particles according to the present invention had a significantly improved composition uniformity, and were extremely fine and had a very narrow particle size distribution in which the core particles had $D_{50}$ of 7.8 μm and $D_{90}$ of 14.1 μm.

(Table 2)

|  | DEV(Al) | DEV(Ni) | DEV(Co) |
|---|---|---|---|
| Example 1 | 13 | 0.73 | 0.68 |
| Comparative Example 1 | 17 | 1.86 | 231 |

As seen from Table 2, it was found that in the case of the core particles produced in the Example, the magnetic particles having substantially the same composition as the composition of the designed raw material were produced.

(Table 3)

| Example 1 | | | Comparative Example 1 | | | Comparative Example 2 | | |
|---|---|---|---|---|---|---|---|---|
| Coercivity (Oe) | Saturated magnetization (emu/g) | Residual magnetization (emu/g) | Coercivity (Oe) | Saturated magnetization (emu/g) | Residual magnetization (emu/g) | Coercivity (Oe) | Saturated magnetization (emu/g) | Residual magnetization (emu/g) |
| 392 | 129 | 25.8 | 321 | 131 | 21.7 | 224 | 128 | 14.2 |

As seen from Table 3, it was found that segregation and an abnormal phase were prevented by quenching, and a composition deviation was prevented by oxidation, thereby producing hard magnetic particles having magnetic properties preventing the magnetic particles from being distinguished from the soft magnetic particles and allowing improved security to be secured, by a simple and very short heat treatment at 750°C for 1 hour.

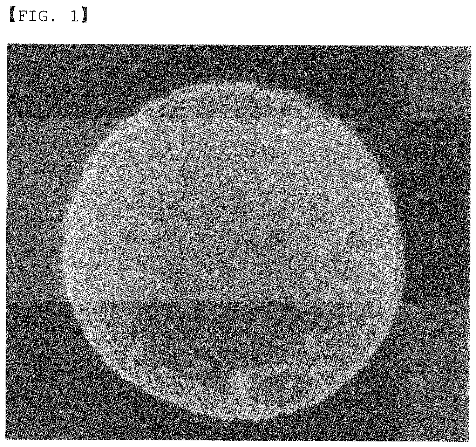

FIG. 1 is a scanning electron microscope photograph of the AlNiCo-based magnetic particle produced in Example 1. As seen from FIG. 1, it was confirmed that substantially truly spherical particles were produced, and a silver shell was uniformly and stably formed by electroless plating at a low temperature of 3°C.

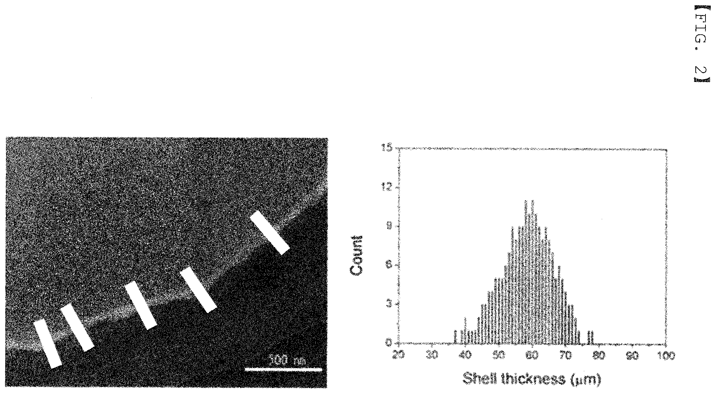

FIG. 2 is a scanning electron microscope photograph of a cross section of the produced AlNiCo-based magnetic particle, and a drawing illustrating a measured thickness distribution of the silver shell. As seen from FIG. 2, the silver shell had an average thickness of 58.4 nm and a thickness standard deviation of only 7.9 nm, and thus, was very uniform. In addition, like the concentration uniformity test, as a result of optionally selecting 50 AlNiCo-based magnetic particles and measuring the thickness and the thickness distribution of the formed silver shell by cross section observation, the silver shell average thickness of all of the measured AlNiCo-based magnetic particles (silver shell average thickness for each magnetic particle) was 56.2 to 59.7 nm, and the standard deviation of the silver shell thickness (standard deviation of the silver shell thickness for each magnetic particle) was in a range of 7.1 to 8.3 nm.

In addition, as a result of measuring the infrared reflectance of the magnetic particles produced by using a spectrophotometer (Carry 5000) and irradiating a laser at 900 nm, the reflectance of 64% was confirmed.

(Example 2)

A security ink for securities was produced using the AlNiCo-based magnetic particles produced in Example 1 (hereinafter, referred to as a hard magnetic ink). Specifically, 18% by weight of a first varnish (KANGNAM JEVISCO CO., LTD., KR-KU), 14% by weight of a second varnish (KANGNAM JEVISCO CO., LTD., KR-KA), 10% by weight of the produced AlNiCo-based magnetic particles, 41% by weight of an extender (DongHo Calcium Corporation, TL-2000), 6% by weight of mixed wax (Micro Powders, Polyfluo 540XF), 2% by weight of aliphatic hydrocarbon (SK chemicals, YK-D130), 2% by weight of a solvent (diethyleneglycol monobutylether), 5% by weight of a surfactant (HANNONG CHEMICALS INC., Koremul-263Na), and 2% by weight of a drying agent were mixed, and then added to a mill and milled four or five times in the mill to produce a security ink.

As a paramagnetic ink, an ink was produced with the same material and composition as the hard magnetic ink, in the same manner as in hard magnetic ink, except that 10% by weight of the magnetic pigment (BASF, 025) was mixed, instead of 10% by weight of the AlNiCo-based magnetic particles produced in Example 1.

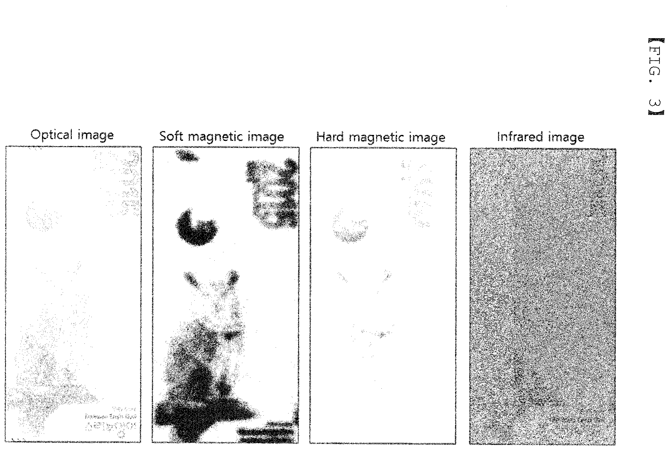

FIG. 3 is a drawing illustrating an optical image, a soft magnetic image, a hard magnetic image, and an infrared image of security elements produced by printing the produced hard magnetic ink and paramagnetic ink.

As seen from the optical photograph of FIG. 3, it was confirmed that general magnetic particles had a dark color specific to the magnetic particles, but the printed part by an ink containing the AlNiCo-based magnetic particles according to the present invention allowed implement of a bright color. In addition, as seen from the soft magnetic image obtained by taking a magnetic image in a soft magnetic mode using a magnetic image measuring apparatus (G&D), it was found that the ink containing the AlNiCo-based magnetic particles according to the present invention had magnetic properties similar to those of a general soft magnetic pigment in a soft magnetic mode, and thus substantial distinction was impossible. However, as seen from the hard magnetic image obtained by taking the magnetic image in a hard magnetic mode using the same magnetic image measuring apparatus, it was found that the AlNiCo-based magnetic particles according to the present invention was stably detected in a hard magnetic mode and formed as a clear image, but the general soft magnetic pigment was not detected. In addition, as seen from the infrared image taken using an infrared image measuring apparatus (Foster & Freeman, VSC 4 PLUS), it was found that the AlNiCo-based magnetic particles according to the present invention did not appear as an image by the infrared reflection property, but the general soft magnetic pigment formed an image by the infrared absorption property.

Hereinabove, although the present invention has been described by specific matters, limited exemplary embodiments, and drawings, they have been provided only for assisting the entire understanding of the present invention, and the present invention is not limited to the exemplary embodiments, and various modifications and changes may be made by those skilled in the art to which the present invention pertains from the description. Those changes remain within the scope of the appended claims.

**Claims**

1.  An AlNiCo-based magnetic particle which is a hard magnetic particle comprising: a core particle which is an AlNiCo-based alloy containing 4 to 12% of Al, 10 to 20% of Ni, 15 to 25% of Co, 1 to 10% of Ti, 0.5 to 5% of Cu, a remainder of Fe, and other inevitable impurities, based on a % by weight; and an inorganic shell covering the core particle, wherein

    the core particle is an ultrafine particle having $D_{50}$ of 12 $\mu$m or less, the $D_{50}$ being a particle size corresponding to 50% in a particle size cumulative distribution of the core particles, and **characterised in that**
    the core particle has a composition uniformity of the following Equations 1, 2, and 3:

    $$\text{Equation 1: } 10 \leq \text{UNF (Al)} \leq 200$$

    $$\text{Equation 2: } 10 \leq \text{UNF (Ni)} \leq 200$$

    $$\text{Equation 3: } 10 \leq \text{UNF (Co)} \leq 200$$

    wherein UNF (Al) is a value obtained by dividing an average Al composition among the core particles by a standard deviation of an Al composition, based on a % by weight of the composition, UNF (Ni) is a value obtained by dividing an average Ni composition among the core particles by a standard deviation of a Ni composition, based on the % by weight of the composition, and UNF (Co) is a value obtained by dividing an average Co composition among the core particles by a standard deviation of a Co composition, based on the % by weight of the composition, the average composition and the standard deviation for each element being calculated from at least 50 core particles.

2.  The AlNiCo-based magnetic particle of claim 1, wherein the core particle satisfies the following Equations 7 and 8:

    $$\text{Equation 7: } 3 \ \mu\text{m} \leq D_{50} \leq 12 \ \mu\text{m}$$

    $$\text{Equation 8: } 10 \ \mu\text{m} \leq D_{90} \leq 20 \ \mu\text{m}$$

    wherein $D_{50}$ is a particle size corresponding to 50% in the particle size cumulative distribution of the core particles, and $D_{90}$ is a particle size corresponding to 90% in the particle size cumulative distribution of the core particles.

3.  The AlNiCo-based magnetic particle of claim 1, wherein the inorganic shell includes a metal shell, and the metal shell satisfies the following Equations 9 and 10:

$$\text{Equation 9: } 50 \text{ nm} \leq t_m \leq 100 \text{ nm}$$

$$\text{Equation 10: } \sigma_t \leq 30 \text{ nm}$$

wherein $t_m$ is an average thickness of the metal shell, and $\sigma_t$ is a standard deviation of a metal shell thickness.

4. The AlNiCo-based magnetic particle of claim 3, wherein the inorganic shell further includes a dielectric shell positioned on an upper or lower portion of the metal shell.

5. The AlNiCo-based magnetic particle of claim 1, wherein the magnetic particle has a saturated magnetism (Ms) of 50 to 150 $Am^2$/kg (50 to 150 emu/g) and a residual magnetism (Mr) of 10 to 40 $Am^2$/kg (10 to 40 emu/g).

6. The AlNiCo-based magnetic particle of claim 1, wherein the magnetic particle has a coercivity of $100 \times 10^3/(4\,\pi)$ to $500 \times 10^3/(4\,\pi)$ A/m (100 to 500 Oe).

7. The AlNiCo-based magnetic particle of claim 1, wherein the core particle further contains one or two or more fourth elements selected from Cu, Ti, Fe, and Si.

8. The AlNiCo-based magnetic particle of claim 7, wherein the core particle has a value of 10 or more, the value being obtained by dividing an average fourth element composition among the core particles by a standard deviation of a fourth element composition, based on the % by weight of the composition.

9. The AlNiCo-based magnetic particle of claim 1, wherein the magnetic particle has an infrared reflectance of 60% or more at a wavelength of 900 nm.

10. A security ink comprising the AlNiCo-based magnetic particles of claim 1.

11. Securities comprising the AlNiCo-based magnetic particles of claim 1.

**Patentansprüche**

1. Magnetisches Teilchen auf AlNiCo-Basis, bei dem es sich um ein hartes magnetisches Teilchen handelt, umfassend:

ein Kernteilchen, bei dem es sich um eine Legierung auf AlNiCo-Basis handelt, die 4 bis 12% Al, 10 bis 20% Ni, 15 bis 25% Co, 1 bis 10% Ti, 0,5 bis 5% Cu, einen Rest Fe und andere unvermeidliche Verunreinigungen, bezogen auf Gewichtsprozent, enthält; und eine anorganische Hülle, die das Kernteilchen bedeckt, wobei
das Kernteilchen ein ultrafeines Teilchen mit $D_{50}$ von 12 $\mu$m oder weniger ist, wobei $D_{50}$ eine Teilchengröße ist, die 50% in einer kumulativen Teilchengrößenverteilung der Kernteilchen entspricht, und **dadurch gekennzeichnet, dass**
das Kernteilchen eine gleichmäßige Zusammensetzung gemäß den Gleichungen 1, 2 und 3 hat:

$$\text{Gleichung 1: } 10 \leq \text{UNF (Al)} \leq 200$$

$$\text{Gleichung 2: } 10 \leq \text{UNF (Ni)} \leq 200$$

$$\text{Gleichung 3: } 10 \leq \text{UNF (Co)} \leq 200$$

wobei UNF (Al) ein Wert ist, der erhalten wird, indem eine durchschnittliche Al-Zusammensetzung unter den Kernteilchen durch eine Standardabweichung einer Al-Zusammensetzung, basierend auf Gewichtsprozent der Zusammensetzung, dividiert wird, UNF (Ni) ein Wert ist, der erhalten wird, indem eine durchschnittliche Ni-Zusammensetzung unter den Kernteilchen durch eine Standardabweichung einer Ni-Zusammensetzung, basierend auf Gewichtsprozent der Zusammensetzung, dividiert wird, UNF (Co) ein Wert ist, der erhalten wird, indem eine durchschnittlichen Co-Zusammensetzung unter den Kernteilchen durch eine Standardabweichung einer Co-Zusammensetzung, basierend auf Gewichtsprozent der Zusammensetzung, dividiert wird, wobei die durchschnittliche Zusammensetzung und die Standardabweichung für jedes Element aus mindestens 50 Kernteilchen berechnet werden.

2. Magnetisches Teilchen auf AlNiCo-Basis nach Anspruch 1, wobei das Kernteilchen die folgenden Gleichungen 7 und 8 erfüllt:

$$\text{Gleichung 7: } 3 \ \mu m \leq D_{50} \leq 12 \ \mu m$$

$$\text{Gleichung 8: } 10 \ \mu m \leq D_{90} \leq 20 \ \mu m$$

wobei $D_{50}$ eine Teilchengröße ist, die 50% in der kumulativen Teilchengrößenverteilung der Kernteilchen entspricht, und $D_{90}$ eine Teilchengröße ist, die 90% in der kumulativen Teilchengrößenverteilung der Kernteilchen entspricht.

3. Magnetisches Teilchen auf AlNiCo-Basis nach Anspruch 1, wobei die anorganische Hülle eine Metallhülle enthält und die Metallhülle die folgenden Gleichungen 9 und 10 erfüllt:

$$\text{Gleichung 9: } 50 \ nm \leq t_{m} \leq 100 \ nm$$

$$\text{Gleichung 10: } \sigma_{t} \leq 30 \ nm$$

wobei $t_{m}$ die durchschnittliche Dicke der Metallhülle und $\sigma_{t}$ die Standardabweichung der Metallhüllendicke ist.

4. Magnetisches Teilchen auf AlNiCo-Basis nach Anspruch 3, wobei die anorganische Hülle ferner eine dielektrische Hülle umfasst, die auf einem oberen oder unteren Teil der Metallhülle angeordnet ist.

5. Magnetisches Teilchen auf AlNiCo-Basis nach Anspruch 1, wobei das magnetische Teilchen einen gesättigten Magnetismus (Ms) von 50 bis 150 Am$^2$/kg (50 bis 150 emu/g) und einen Restmagnetismus (Mr) von 10 bis 40 Am$^2$/kg (10 bis 40 emu/g) aufweist.

6. Magnetisches Teilchen auf AlNiCo-Basis nach Anspruch 1, wobei das magnetische Teilchen eine Koerzitivfeldstärke von $100 \times 10^3/(4 \ n)$ bis $500 \times 10^3/(4 \ n)$ A/m (100 bis 500 Oe) aufweist.

7. Magnetisches Teilchen auf AlNiCo-Basis nach Anspruch 1, wobei das Kernteilchen ferner ein oder zwei oder mehr vierte Elemente, ausgewählt aus Cu, Ti, Fe und Si, enthält.

8. Magnetisches Teilchen auf AlNiCo-Basis nach Anspruch 7, wobei das Kernteilchen einen Wert von 10 oder mehr aufweist, wobei der Wert erhalten wird, indem eine durchschnittliche Zusammensetzung des vierten Elements unter den Kernteilchen durch eine Standardabweichung einer Zusammensetzung des vierten Elements, basierend auf Gewichtsprozent der Zusammensetzung, dividiert wird.

9. Magnetisches Teilchen auf AlNiCo-Basis nach Anspruch 1, wobei das magnetische Teilchen ein Infrarot-Reflexionsvermögen von 60% oder mehr bei einer Wellenlänge von 900 nm aufweist.

10. Sicherheitstinte, die die magnetischen Teilchen auf AlNiCo-Basis nach Anspruch 1 enthält.

11. Wertpapiere, die die magnetischen Teilchen auf AlNiCo-Basis nach Anspruch 1 enthalten.

**Revendications**

1. Une particule magnétique à base d'AlNiCo qui est une particule magnétique dure comprenant : une particule centrale qui est un alliage à base d'AlNiCo contenant 4 à 12% d'Al, 10 à 20% de Ni, 15 à 25% de Co, 1 à 10% de Ti, 0,5 à 5% de Cu, un reste de Fe, et d'autres impuretés inévitables, sur la base d'un% en poids ; et une coquille inorganique recouvrant la particule centrale, dans laquelle

la particule centrale est une particule ultrafine dont la $D_{50}$ est inférieure ou égale à 12 μm, la $D_{50}$ étant une taille de particule correspondant à 50% dans une distribution cumulative de la taille des particules centrales, et **caractérisée par le fait que**

la particule centrale présente une uniformité de composition conforme aux équations 1, 2 et 3 :

$$\text{Équation 1 : } 10 \leq \text{UNF (Al)} \leq 200$$

$$\text{Équation 2 : } 10 \leq \text{UNF (Ni)} \leq 200$$

$$\text{Équation 3 : } 10 \leq \text{UNF (Co)} \leq 200$$

où le UNF (Al) est une valeur obtenue en divisant une composition moyenne d'Al parmi les particules centrales par un écart type d'une composition d'Al, sur la base d'un % en poids de la composition, le UNF (Ni) est une valeur obtenue en divisant une composition moyenne de Ni parmi les particules centrales par un écart type d'une composition de Ni, sur la base d'un % en poids de la composition, le UNF (Co) est une valeur obtenue en divisant une composition moyenne de Co parmi les particules centrales par un écart type d'une composition de Co, sur la base d'un % en poids de la composition, la composition moyenne et l'écart type pour chaque élément étant calculés à partir d'au moins 50 particules centrales.

2. La particule magnétique à base d'AlNiCo de la revendication 1, dans laquelle la particule centrale satisfait aux équations 7 et 8 suivantes :

$$\text{Équation 7 : } 3 \text{ μm} \leq D_{50} \leq 12 \text{ μm}$$

$$\text{Équation 8 : } 10 \text{ μm} \leq D_{90} \leq 20 \text{ μm}$$

où $D_{50}$ est une taille de particule correspondant à 50% de la distribution cumulative de la taille des particules centrales, et $D_{90}$ est une taille de particule correspondant à 90% de la distribution cumulative de la taille des particules centrales.

3. La particule magnétique à base d'AlNiCo de la revendication 1, dans laquelle la coquille inorganique comprend une coquille métallique, et la coquille métallique satisfait aux équations 9 et 10 suivantes :

$$\text{Équation 9 : } 50 \text{ nm} \leq t_m \leq 100 \text{ nm}$$

$$\text{Équation 10 : } \sigma_t \leq 30 \text{ nm}$$

où $t_m$ est l'épaisseur moyenne de la coquille métallique et $\sigma_t$ est l'écart type de l'épaisseur de la coquille métallique.

4. La particule magnétique à base d'AlNiCo de la revendication 3, dans laquelle la coquille inorganique comprend en outre une coquille diélectrique placée sur une partie supérieure ou inférieure de la coquille métallique.

5. La particule magnétique à base d'AlNiCo de la revendication 1, dans laquelle la particule magnétique a un magnétisme saturé (Ms) de 50 à 150 Am$^2$/kg (50 à 150 emu/g) et un magnétisme résiduel (Mr) de 10 à 40 Am$^2$/kg (10 à 40 emu/g).

6. La particule magnétique à base d'AlNiCo de la revendication 1, dans laquelle la particule magnétique a une coercivité de $100 \times 10^3/(4 \, \Pi)$ à $500 \times 10^3/(4 \, \Pi)$ A/m (100 à 500 Oe).

7. La particule magnétique à base d'AlNiCo de la revendication 1, dans laquelle la particule centrale contient en outre un ou deux ou plusieurs quatrièmes éléments choisis parmi Cu, Ti, Fe et Si.

8. La particule magnétique à base d'AlNiCo de la revendication 7, dans laquelle la particule centrale a une valeur de 10 ou plus, la valeur étant obtenue en divisant une composition moyenne du quatrième élément parmi les particules centrales par un écart type d'une composition du quatrième élément, sur la base du % en poids de la composition.

9. La particule magnétique à base d'AlNiCo de la revendication 1, dans laquelle la particule magnétique a une réflectance infrarouge de 60% ou plus à une longueur d'onde de 900 nm.

10. Encre de sécurité comprenant les particules magnétiques à base d'AlNiCo de la revendication 1.

11. Titres comprenant les particules magnétiques à base d'AlNiCo de la revendication 1.

【FIG. 1】

【FIG. 2】

【FIG. 3】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20130072444
- KR 1718505
- KR 20170078023 A
- KR 1341150